# EUROPEAN PATENT SPECIFICATION

(11) **EP 1 747 453 B1**
(45) Date of publication and mention of the grant of the patent: **02.09.2009**
(21) Application number: 04804684.1
(22) Date of filing: 06.12.2004
(51) Int. Cl.: G01N 27/447

(54) **CONTROLLING SAMPLE LOADING OF A SPECIMEN**
STEUERUNG DES PROBENAUFTRAGS EINES PRÄPARATS
CHARGEMENT SOUS CONTROLE D'UN SPECIMEN

(30) Priority: 13.05.2004 EP 04102089
(43) Date of publication of application: 31.01.2007
(73) Proprietor: Agilent Technologies, Inc., Santa Clara, CA 95051 (US)
(72) Inventor: RUEFER, Andreas, 76137 Karlsruhe (DE); SEIFRIED, Martin, 76275 Ettlingen (DE); KRATZMEIER, Martin, 76337 Waldbronn (DE)
(74) Representative: Barth, Daniel Mathias
(86) International application number: PCT/EP2004/053279
(87) International publication number: WO 2005/114167

(56) References cited:
- EP-A- 0 653 631
- WO-A-01/59440
- WO-A-20/05068993
- DE-A1- 19 927 535
- GRASS B ET AL: "A NEW PMMA-MICROCHIP DEVICE FOR ISOTACHOPHORESIS WITH INTEGRATED CONDUCTIVITY DETECTOR" SENSORS AND ACTUATORS B, ELSEVIER SEQUOIA S.A., LAUSANNE, CH, vol. B72, no. 3, 10 February 2001 (2001-02-10), pages 249-258, XP001182458 ISSN: 0925-4005

## Description

### BACKGROUND ART

The present invention relates to injecting a sample of a specimen.

Modem biochemical analyzers can achieve a very high degree of sensitivity and comprise a very low detection limit. Consequently the amount of specimen used for chemical and/or biological analysis has been decreasing over the last few years and is now in the order of some microliter. State of the art microfluidic analyzer systems as, for example, the 2100 Bioanalyzer or the 5100 ALP Bioanalyzer by Agilent Technologies use even smaller amounts of specimen for analysis. In these analyzers a sample of the specimen is loaded and cut out for further analysis processing. However, due to the small amount of sample loaded from the specimen, external and sometimes not influenceable parameters like concentration gradients within the specimen's volume, type of specimen or purification conditions might cause a strong impact on the sample and on the analysis.

Microfluidic devices with sample injection are also known from WO 01/59440 A2, WO 2005/068993 A1, EP 0653631 A2, and DE 19927535 A1, the teaching of the latter forming the preamble to claim 1.

While the aforementioned documents all relate to diverting an already separated sample plug (e.g. for further processing), this invention deals with the problem of achieving a component distribution of the loaded sample similar to the component distribution in the specimen.

### DISCLOSURE

It is an object of this invention to provide an improved loading and injection for a sample. The improved loading reduces the affect of concentration gradients within the specimen and purification conditions.

The specimen to be analyzed normally comprises a plurality of different components, components having different concentration within the specimen. Each of those components might have different mass, size or even comprise an electrical charge. A typical example of such specimen include a mixture of proteins, amino acids or DNA and RNA, respectively. Particularly such protein specimen can also vary dramatically in salt content. Additionally some of those components inherit an electrical charge, while other are electrically neutral. For example, the specimen might comprise a protein which is very small in size and mass but with a high electrical charge. Another protein might comprise a higher mass and only few electrical charges. Specimen components can also be surrounded by electrically charged carriers for analysis.

The mixture and huge variety of such specimen is then processed for analysis. Often only small amounts of specimen are available and microfluidic systems are used for such occurrence. In microfluidic systems the specimen is loaded into a so-called injection channel. At a specific area of the injection channel a sample is cut out (injected) from the specimen and the channel and processed for further analysis. The objective for optimal injection is that the sample composition of the injected sample exactly matches the actual composition and distribution of the specimen.

According to the invention, a sample loading device is provided. The sample loading device comprises an injection channel having a sample injection spot. The injection channel is designed for a specimen comprising fluid to be injected. Furthermore the sample loading device comprises transporting the specimen within the fluid along the injection channel. Thus, the specimen with its different components, having a different size, mass or electrical charge is transported along the injection channel and also transported along the sample injection spot. The sample loading device further comprises a separation device for separating a sample from the specimen starting at the sample injection spot.

As mentioned before this injected sample should match the actual specimen's content. If the distribution along the injection channel is mainly uniform, then the content at the sample injection point will be similar to the content of the whole specimen. However, the distribution depends on the volume used for the specimen and the way the sample is loaded into the injection channel. Therefore a control unit is provided and coupled to the loading device. The control unit is adapted for controlling the loading device by analyzing a physical parameter of the fluid. It also controls the separation device. Depending on the physical parameter of the fluid the control unit regulates the loading device for loading a sample from the specimen. In other words, the time for loading the sample from the specimen is now dependent on the physical parameter of the fluid containing the specimen. This will allow the loading procedure to dynamically adapt the loading process to the electrical or physical properties of the fluid containing the specimen. The loading process is monitored by the control unit using the measurement of the physical parameter of the fluid.

The physical parameter is a time-dependent electrical parameter of the fluid. Such a parameter can be used if the specimen within the fluid comprises electrically charged components. In an embodiment the parameter is a time-dependent resistance of the fluid along the injection channel. Measuring the resistance along the injection channel allows information about the distribution of the specimen having electrical charged components along the injection channel. In yet another embodiment the parameter detected comprises a time-dependent current flow along the injection channel or a time dependent voltage drop.

In another embodiment, the injection channel comprises a specimen reservoir arranged between a first part and a second part of the injection channel. The reservoir comprises a volume for the specimen. The volume might be bigger than the volume of the injection channel. A uniform distribution along the injection channel is achieved.

In yet another embodiment, distributing the specimen along the injection channel is adapted for generating an electrical field along the injection channel. In an embodiment the first electrode is arranged near a first end of the injection channel and the second electrode arranged near a second end of the injection channel. The sample injection spot is arranged between the first and second electrode. Applying an electrical field to the first and second electrode will pull electrically charged components of the specimen along the injection channel. The control unit for detecting an electrical parameter of the fluid is coupled to the first and second electrodes. The control unit might be adapted for measuring the current flowing through the injection channel, the voltage drop or the resistance, respectively, along the injection channel.

In a further embodiment, the separation device comprising a separation channel is connected to the sampling injection spot. Injection channel and separation channel are connected together in the sample injection spot. In one embodiment they form a cross-like connection. The separation device might comprise a first electrode and a second electrode arranged in the separation channel, used for separating a sample out of the injection channel into the separation channel. Applying an electrical field of the first and second electrode of the separation channel will pull a sample from the injection spot into the separation channel thereby separating the sample from the rest of the specimen. The time for applying such an electrical field is controlled by the control unit for detecting the physical or electrical parameter of fluid.

In another embodiment, the injection channel comprises a sieving matrix fed into the injection channel before the specimen's loading and injection, the feeding matrix comprising PDMA, acrylamide, or another polymeric substance. Such sieving matrix allows separating and distributing different components of different size and mass along the injection channel and the separation channel. The fluid comprising the sieving matrix might be used especially for electrophoresis analysis.

### BRIEF DESCRIPTION OF DRAWINGS

Other objects and many of the attendant advantages of the embodiments of the present invention will be readily appreciated and better understood by reference to the following description of embodiments in connection with the accompanying drawings. It will be apparent to those skilled in the art that the drawings referenced herein are used for illustration purposes only and do not limit the scope of the invention. Features that are substantially or functionally equal or similar will be referred to with the same reference signs.

Figure 1 shows a top view of an embodiment of the present invention.

Figure 2 shows a different view of the same embodiment.

Figure 3 is a concentration time diagram along the injection channel of an embodiment for different components of an injected specimen.

Figure 4 shows another embodiment.

Figure 5 shows the separation of a specimen into its components after applying an electrical field.

Figure 6 shows a current time diagram determining the correct separation time for different specimens.

Figure 7 shows the current or voltage behavior over time for a loaded specimen.

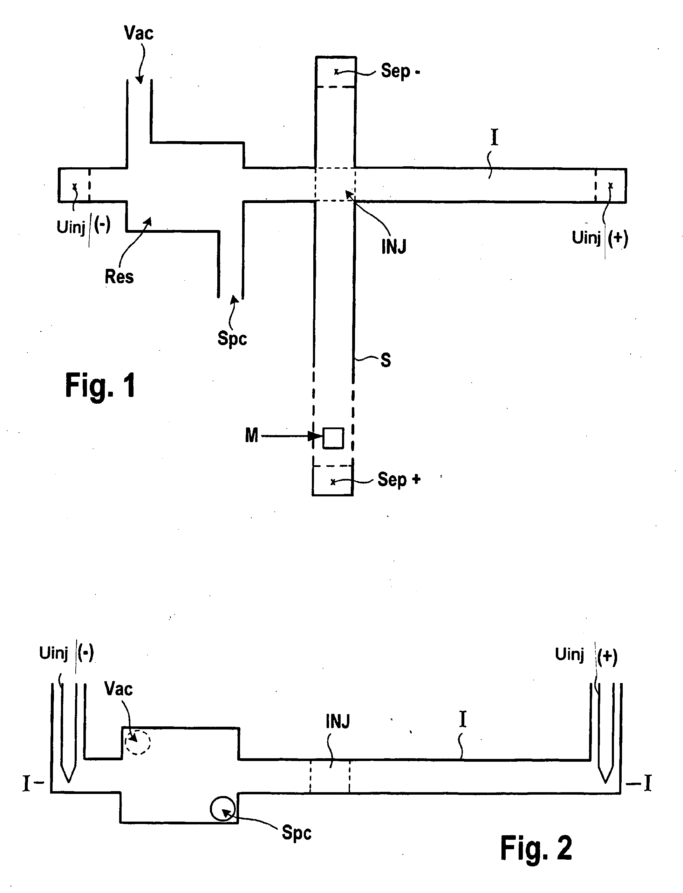

Figure 1 shows an embodiment of a microfluidic sample loading device used for electrophoresis analysis. In electrophoresis analysis an electrical field is applied to a specimen comprising electrically charged components. Such components might be, for example, electrically charged amino acids or proteins or RNA or DNA or other biomolecules. Because of the electric field applied to the specimen a force moves the charged components towards the electrodes providing the electric field. Due to different electrical charges of each component and different masses the moving velocity of the components will be different. Generally spoken, smaller components or components with a high electrical charge to mass ratio move faster towards the electrodes of the electrical field than larger components or components with a low charge to mass ratio. Therefore the specimen will separate into the different components.

This effect is enhanced by using a sieving matrix in which the specimen is loaded, injected and separated. The sieving matrix offers additional resistance for larger components of the specimen. The moving speed is reduced in the sieving matrix depending on the size and mass of the components

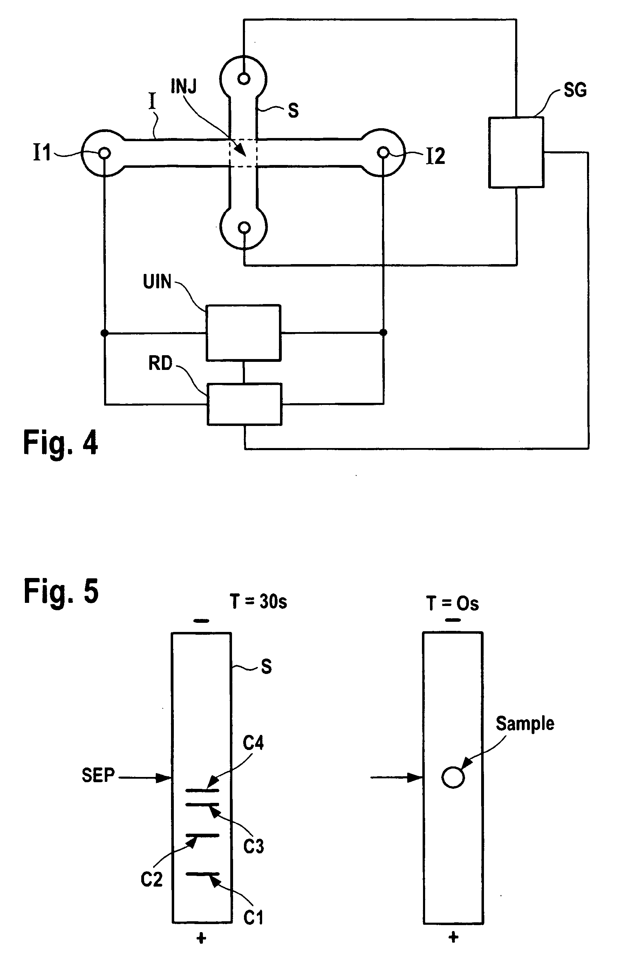

Figure 5 shows an example of a standard gel electrophoresis experiment of specimen having electrically charged components of different sizes and masses. A sample of the specimen is injected into a so-called separation channel S shown herein at the areas SEP. An electrical field using two electrodes (-, +) is then applied at the end of the separation channel S. As one can see at the beginning for time T=0, the sample is right in the middle of the separation channel S at the area SEP. Then the electrical field is activated and the different components within the sample of the specimen become separated. After thirty seconds four different components can be distinguished. The electrical field applied to the separation channel forces the negative charged components to migrate towards the positive electrode.

Due to their lower mass or size, respectively, some components are moving much faster than others. After thirty seconds the electrical field is switched off. The position of the four components compared to the starting point in the middle of the separation channel gives information about the size and the mass. Component C1 was the fastest moving component followed by component C2, C3 and C4 respectively. Assuming the all of the component C1 to C4 are equally charged, one might identify the component C1 as the smallest, and C4 as the biggest in size and mass. Comparing the distance of those 4 components to the starting area SEP with known samples, an identification of the size and mass or even the identification of the component is possible.

For automatic analysis it is easier to determine the moving time until the components C1 to C4 reach a specific point along the separation channel. The known distance from the starting area to the specific point and the measured time will then give the information needed about the size and the mass of the component. This principle of electrophoresis is used in the embodiment according to Figure 1.

The sample loading device comprises an injection channel I having a sample extraction point INJ. At the sample injection point INJ, a separation channel S is crossing the injection channel I. Both channels comprise only very small volumes in the range of micro- or even nanoliters. They may be formed in a glass or plastic body as capillary vessels. The separation channel S comprises a first separation electrode Sep-in the upper part of the separation channel S and a second electrode Sep+ at the lower part of the separation channel. The electrodes are formed of a conductive material and adapted to apply a voltage or current to them. The voltage or current will generate an electrical field in the separation channel S. The lower part of the separation channel S is much longer than the upper part and used to separate the different components (anions) of the sample to be analyzed.

The injection channel I comprises a first electrode Uinj- on one end and a second electrode Uinj+ on the other end. The electrodes are conductive. By applying a voltage or current to both electrodes an electrical field is generated along the injection channel I. The electrical field may be uniform and constant along the channel. This would result a constant force on the specimen. However non-homogenous electrical fields are also possible.

Between the sample injection spot INJ and the first electrode Uinj- a reservoir Res for the specimen is arranged. The volume of the reservoir Res is large compared to the volumes of the injection channel and the separation channel. For example the reservoir Res comprises a volume in the magnitude of a few microliter while the volumes of the injection channel I and the separation channel S comprise only a few nanoliters. In a specific example the volume of the injection channel comprises 12 nanoliters, while the volume of the reservoir Res is about 500 nanoliters. The reservoir Res comprises an inlet for feeding a specimen into the reservoir Res and an outlet VAC where vacuum for hydrodynamic specimen movement is applied. The distance between the reservoir Res and the sample injection spot in this example is only a few hundred micrometers, for example 200 micrometers.

The injection channel as well as the separation channel is filled with a sieving matrix. The sieving matrix offers additional resistance for the components of the specimen, when moving towards the electrodes after applying an electrical field. The sieving matrix might comprise PDMA (poly-N,N-dimethyl-acrylamide), polyacrylamide, polyethylene oxide, polyvinylpyrrolidone, hydroxypropylmethylcellulose or other polymeric matrices.

The specimen is then drawn into the reservoir hydrodynamically by applying a vacuum on the outlet VAC, moving the specimen into the reservoir. Once the reservoir and the inlet and outlet areas are filled by the specimen the vacuum is turned off and an electrical field is applied across the first electrode Uinj- and the second electrode Uinj+ of the injection channel I.

The different components within the specimen will now electrokinetically move along the injection channel towards the first electrode or the second electrode. For example, the negative charged components of the specimen will be moving towards the second electrode Uinj+. At a specific point in time the portion of the specimen at the sample injection spot INJ is injected into the separation channel S. This is done by modifying the electrical field of the first and second electrode Uinj- and Uinj+ of the injection channel I and applying a second electric field using the separation electrodes Sep- and Sep+. Thereby a sample of the specimen at the injection spot INJ is cut out and injected into the separation channel S. The components within that sample will now separate due to different velocities while moving along the separation channel S towards the separation electrode Sep+ and the measurement point M.

Another view of the sample loading device according to Figure 1 can be seen in Figure 2. The separation channel SEP is perpendicular to the drawing plane only showing the sample injection point INJ. One can also see the injection electrode Uinj- and Uinj+ of the injection channel I. They are placed in an inlet area, which is connected to the injection channel I. Those areas are adapted to be filled by the sieving matrix. The specimen is drawn into the reservoir by an inlet area on the lower right of the reservoir Res.

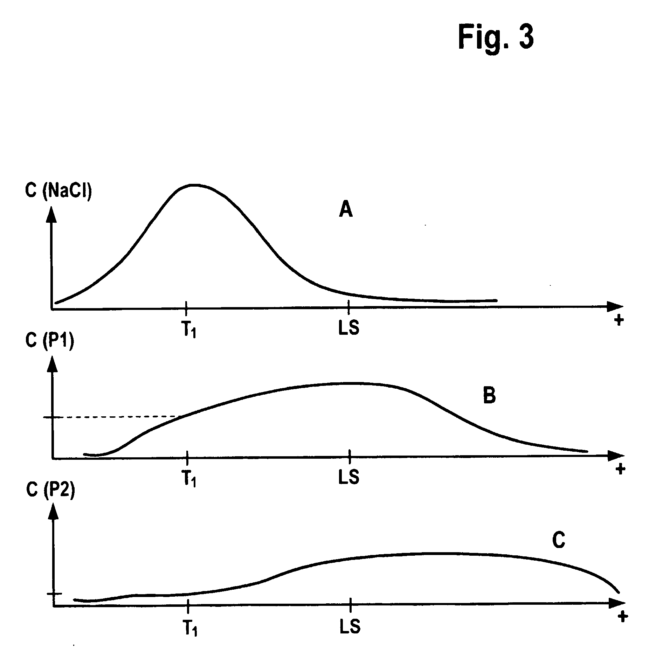

When applying an electric field along the injection channel I the resulting driving force is acting on all charged components within the specimen. Those components will be moving through the sieving matrix within the injection channel with different velocities, depending on their size and charge-mass ratio. Smaller components or components with a high charge-mass ratio will move faster along the injection channel I than larger components or components with a lower charge-mass ratio. The distribution of different components in the specimen over time at the sample injection spot can be seen in Figure 3.

In this example the specimen comprises Cl⁻ (chloride), which is normally incorporated in buffers or other sample components. Furthermore the specimen comprises two different proteins P1 and P2 that are engulfed within a negatively charged carrier molecule like sodium-dodecyl sulfate (SDS). The protein component P2 is larger than the first protein P1. The curves show the distribution or concentration function over time on the sample injection spot INJ when an electrical field across the two electrodes Uinj- and Uinj+ of the injection channel I is applied. Since the sodium and chloride ions are very small they are moving very fast along the injection channel. The maximum concentration of Cl-anions on the sample injection spot occurs at the time T1. However, the concentration ratio of the first protein P1 and the second protein P2 at this time T1 is different from the normal concentration ratio in the specimen. While the concentration for the first component P1 is roughly one half of the maximum concentration, the concentration of the second protein P2 is less than a quarter of the maximum concentration. The concentration ratio of P1 and P2 at this time are therefore different compared to the overall concentration ratio of the specimen.

In other words, the parameters for loading a sample to the sample injection spot have to be chosen very carefully in order to achieve in the sample (to be analyzed) the same concentration ratio for protein P1 and P2 as in the original specimen.

At the loading time t(LS) the concentration of protein P1 and protein P2 have already reached their maximum (plateau) and do not change anymore. The concentration ratio at this time now represents the concentration ratio in the original specimen. Therefore the time t(L) is considered to be the optimum for loading the sample on the sample injection spot into the separation channel for further analysis.

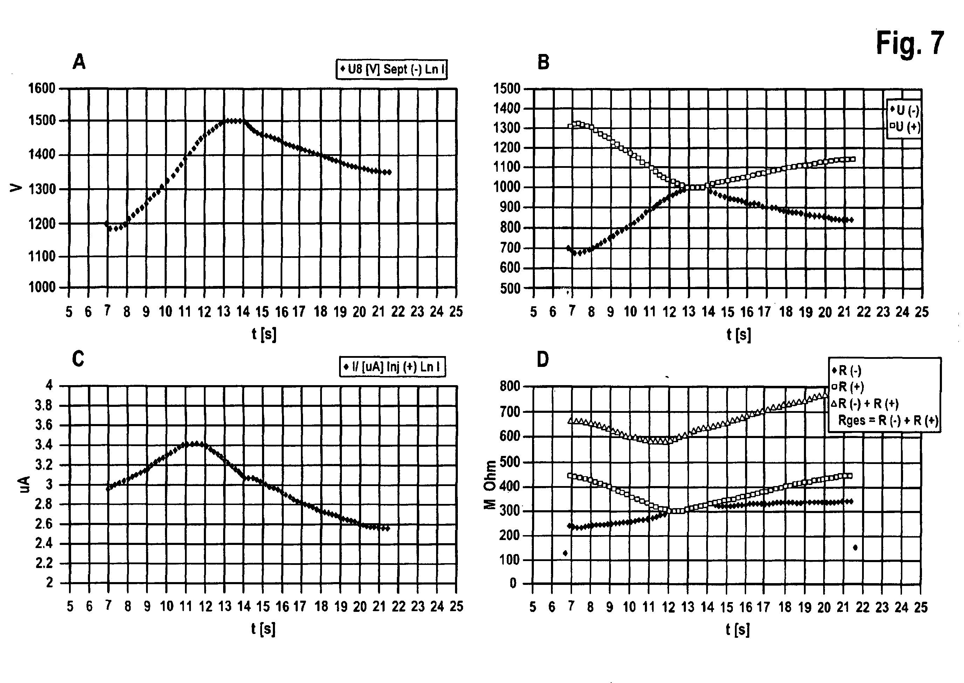

To determine the correct loading time t(LS) for the specimen to be analyzed the current across the injection channel I or the resistance across the injection channel I are measured over time. Upon application of the electrical field to move the specimen's anions across the injection channel towards the Uinj+ electrode the channel resistance decreases while the current flow along the injection channel I increases. This behavior can be seen in frame B to D of figure 7. The voltage along the injection channel, showing in frame B, decreases from roughly 1300 Volts to about 1000 V. At the same time the current along the injection channel is increasing, as shown in frame C. The reasons for this behavior are that the specimen ions are moving from the reservoir into the injection channel, which is so far only filled with sieving matrix and the ions therein. The current transporting ion density increases along the injection channel. The total number of ions between the two electrodes Uinj- and Uinj+ along the injection channel is thus increasing.

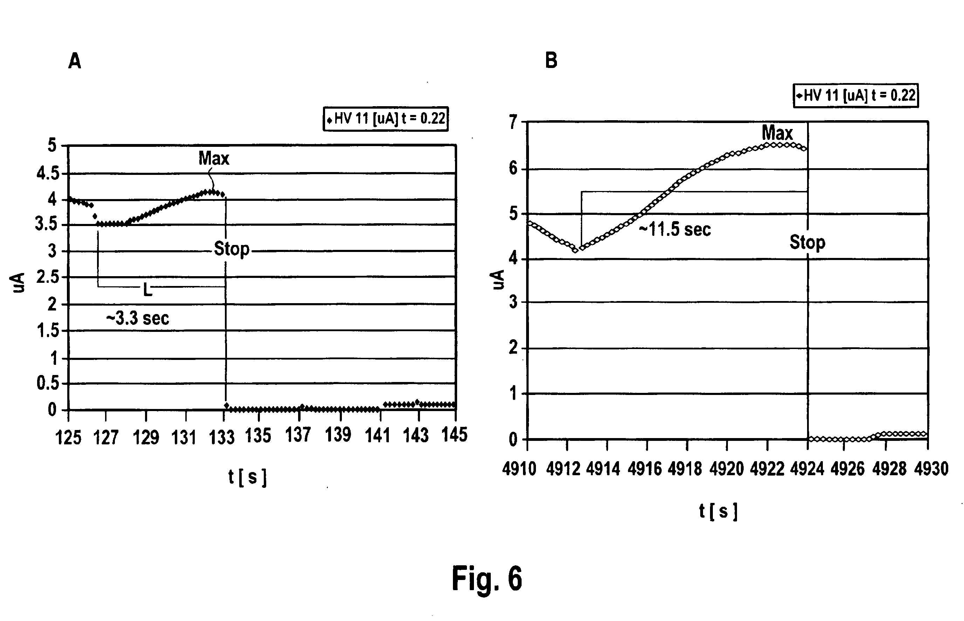

At a certain point in time the fast moving anions, for example the chloride anions of the specimen, have reached the second electrode Uinj+. At this point the density of ions along the injection channel I has reached a maximum and is now mostly homogenous along the injection channel. The channel resistance in Frame D is now at a minimum point. After that the channel resistance in frame D of Figure 6 starts to rise again. The longer the injection voltage is applied the more ions are drawn to the electrodes Uinj- and Uinj+. The ion density in the injection channel decreases again with the sample reservoir being depleted.

These observations lead to a loading time depending on the current or the resistance along the injection channel I. If the loading time is too short, the specimen components of high molecular weight may be underrepresented. Vice versa if sample loading is allowed to proceed too long the low molecular weight components are underrepresented, because the majority already reached the second injection electrode Uinj+. However, in this example, the minimum in overall channel resistance indicates a good distribution of all ion types within the injection channel I.

Therefore, the channel resistance or the current during the injection procedure is measured. If a maximum in the current or a minimum in the resistance is reached sample loading is stopped by changing the electrical field generated by the two electrodes Uinj- and Uinj+. Then the separation electrodes Sep- and Sep+ are switched on thereby injecting a sample of the specimen. Figure 6 shows a current time measurement for different specimens comprising two different ion concentrations.

The measurements show the current along the injection channel I versus time. The specimen used for the measurement in frame A comprises a very low NaCl concentration compared to a specimen used in frame B, which include a high concentration of NaCl. After starting the loading procedure by switching on the two injection electrodes, the loading time is measured. One can see that the loading time of a specimen with low concentration of NaCl is approximately 3.3 seconds, while the loading time of the high NaCl concentration specimen in frame B is approximately 11.5 seconds. Furthermore the current increase as well as the maximum value is also different. It is apparent that increasing the concentration of NaCl will also increase the maximum current flowing along the injection channel as well as a stronger increase during the loading time.

Figure 4 shows an embodiment of a sample loading device. The sample loading device comprises an injection channel I, a sample injection spot INJ in the injection channel I. A separation channel S is connected to the sample injection spot INJ. The injection channel I as well as the separation channel S is filled with a sieving gel matrix comprising PDMA or acrylamide or any other polymer. The gel matrix comprises a relatively high viscosity and acts as a flow resistance for the specimen components depending on the specimen components' size and mass. The matrix comprises a high specific resistance, which can be significantly reduced by injecting ions into the sieving matrix. On the ends of the injection channel I and the separation channel S conductive electrodes are placed into the channel. The two electrodes of the injection channel I are connected to a voltage generator UIN and to a control unit RD.
The control unit RD measures the resistance across the injection channel I. It also controls the voltage generator UIN. The two electrodes of the separation channel S are connected to a second voltage generator SG, which is also controlled by the control unit RD. Consequently the control unit RD is connected to the voltage generator UIN and the second generator SG. After injecting a specimen into the injection channel the control unit RD selects the voltage generator UIN, which applies a voltage of roughly 2500 Volt across the injection channel I. Particularly a potential of +300 Volts supplied at the first electrode I1 of the injection channel I and a second potential of 2200 Volts is applied to the second electrode I2.

The cations are now moving towards the first electrode I1 while the anions are drawn towards the second electrode I2. At the same time the current through the injection channel I increases while the resistance measured by the control unit RD starts to decrease. At a certain point in time the resistance across the injection channel reaches its minimum and starts to increase again. The control unit RD sends a signal to the voltage UIN to switch off the injection voltage. The different components loaded into the injection channel are now distributed almost homogeneously at the injection spot whereas their distribution other parts of may significantly vary. Specifically the distribution of different components within the specimen at the sample injection spot is considered homogeneous and having a concentration ratio similar to the original content of the specimen.

The control unit RD triggers the separator generator SG to switch on the separation electrodes. A separation voltage is applied to the separation electrodes thereby driving the anions and cations of the sample at the sample injection spot into the separation channel S.
The sample loading device as well as the sample loading method is not limited to electrophoresis analysis described as an example herein. The loaded sample can also be processed by different tools or features of analysis without limiting the scope of protection. For example, if channel geometries differ from the system described here (especially distances between Res & INJ), the optimum time point for sample injection may no longer be characterized by the lowest channel resistance but by another point on the channel resistance/conductivity curves. The best suited injection time character can be empirically determined, and the control units may then be programmed appropriately. The sample movement inside the capillaries may very well be controlled by pressure/vacuum instead of electrically. Still, electric information like channel resistances, currents, etc. may still be used to determine the optimal time point for sample injection.

## Claims

1. Sample loading device for loading and injecting a sample of a fluid comprising a specimen, the sample loading device comprising:
a specimen reservoir (Res),
an injection channel (I),
a first electrode (Uinj-) arranged at a first end of the injection channel (I) and a second electrode (Uinj+) arranged at a second end of the injection channel (I), the first and second electrodes (Uinj-, Uinj+) being adapted for providing an electrical field along the injection channel (I).
a separation device (S, SG, Sep+, Sep-),
an injector (Uinj, UIN) adapted for injecting the fluid comprising the specimen from the specimen reservoir (Res) into the injection channel (I), and
the injection channel (I) having a sample injection spot (INJ) for injecting the sample of the fluid into the separation device (S, SG, Sep+, Sep-) adapted for separating the sample, and
a control unit (RD) adapted for detecting an electrical parameter over time and for controlling the separation device (S, SG, Sep+, Sep-) in response thereto,
**characterized in that** the control unit (RD) is coupled to the first and second electrodes (Uinj-, Uinj+) and adapted for detecting the electrical parameter over time of the fluid along the injection channel (1).

2. Sample loading device of claim 1,
wherein the electrical parameter is one of a resistance of the fluid, a potential difference, and a current flow along the injection channel (1).

3. Sample loading device of claim 1 or 2, wherein
the first electrode (Uinj-) is arranged near the first end of the injection channel (I), and the second electrode (Uinj+) arranged near the second end of the injection channel (I), wherein the sample injection spot (INJ) is arranged between the first and second electrode (Uinj-, Uinj+).

4. Sample loading device of any one of the above claims,
comprising a first electrode (Sep+) and a second electrode (Sep-) arranged in the separation channel (S), wherein the sample injection spot (INJ) is arranged in between the first and second electrode (Sep+, Sep-).

5. Method for loading and injecting a sample of a fluid comprising a specimen, the method comprising:
injecting the fluid from a specimen reservoir (Res) into an injection channel (I), wherein the injection channel (I) has a sample injection spot (INJ) for injecting a sample of the fluid into a separation device (S, SG, Sep+, Sep-) adapted for separating the sample;
detecting - at a first electrode (Uinj-) arranged at a first end of the injection channel (I) and at a second electrode (Uinj+) arranged at a second end of the injection channel (I) - an electrical parameter over time of the fluid along the injection channel (I); and
controlling the separation device (S, SG, Sep+, Sep-) in response to the detected parameter.

6. Method of the preceding claim, wherein detecting the electrical parameter comprises:
- determining a peak value of the physical parameter measured.

7. Method of claim 5 or 6, further comprising:
separating the received sample.

## Patentansprüche

1. Probenbeschickungsvorrichtung zum Beschicken und Injizieren einer Probe einer Flüssigkeit, die eine Prüfsubstanz aufweist, wobei die Beschickungsvorrichtung aufweist:
einen Prüfsubstanzbehälter (Res),
einen Injektionskanal (I),
eine erste Elektrode (Uinj-), die an einem ersten Ende des Injektionskanals (I) angeordnet ist, und eine zweite Elektrode (Uinj+), die an einem zweiten Ende des Injektionskanals (I) angeordnet ist, wobei die erste und die zweite Elektrode (Uinj-, Uinj+) so beschaffen sind, dass sie entlang des Injektionskanals (I) ein elektrisches Feld anlegen.
eine Trennvorrichtung (S, SG, Sep+, Sep-),
eine Injektionsvorrichtung (Uinj, UIN) zum Injizieren der die Prüfsubstanz aufweisenden Flüssigkeit aus dem Prüfsubstanzbehälter (Res) in den Injektionskanal (I), und
wobei der Injektionskanal (I) einen Probeninjektionspunkt (INJ) zum Injizieren der Probe der Flüssigkeit in die Trennvorrichtung (S, SG, Sep+, Sep-), die zum Trennen der Probe dient, und
eine Steuereinheit (RD) zum Detektieren des zeitlichen Verlaufs eines elektrischen Parameters und zum Steuern der Trennvorrichtung (S, SG, Sep+, Sep-) als Reaktion darauf,
**dadurch gekennzeichnet, dass** die Steuereinheit (RD) mit der ersten und der zweiten Elektrode (Uinj-, Uinj+) verbunden ist und zum Detektieren des zeitlichen Verlaufs des elektrischen Parameters der Flüssigkeit entlang des Injektionskanals (I) dient.

2. Probenbeschickungsvorrichtung nach Anspruch 1,
wobei als elektrischer Parameter eines der Folgendes gewählt wird: ein Widerstand der Flüssigkeit, eine Potenzialdifferenz oder ein Stromfluss entlang des Injektionskanals (I).

3. Probenbeschickungsvorrichtung nach Anspruch 1 oder 2, wobei
die erste Elektrode (Uinj-) in der Nähe des ersten Endes des Injektionskanals (I) angeordnet ist,
und die zweite Elektrode (Uinj+) in der Nähe des zweiten Endes des Injektionskanals (I) angeordnet ist, wobei der Probeninjektionspunkt (INJ) zwischen der ersten und der zweiten Elektrode (Uinj-, Uinj+) angeordnet ist.

4. Probenbeschickungsvorrichtung nach einem der vorhergehenden Ansprüche, welche
eine jeweils im Trennkanal (S) angeordnete erste Elektrode (Sep+) und eine zweite Elektrode (Sep-) aufweist, wobei der Probeninjektionspunkt (INJ) zwischen der ersten und der zweiten Elektrode (Sep+, Sep-) angeordnet ist.

5. Verfahren zum Beschicken und Injizieren einer Probe einer Flüssigkeit, die eine Prüfsubstanz aufweist, wobei das Verfahren folgende Schritte aufweist:
Injizieren der Flüssigkeit aus einem Prüfsubstanzbehälter (Res) in einen Injektionskanal (I), wobei der Injektionskanal (I) einen Probeninjektionspunkt (INJ) zum Injizieren einer Probe der Flüssigkeit in eine Trennvorrichtung (S, SG, Sep+, Sep-) aufweist, die zum Trennen der Probe dient;
Detektieren des zeitlichen Verlaufs eines elektrischen Parameters entlang des Injektionskanals (I) an einer ersten Elektrode (Uinj-), die an einem ersten Ende des Injektionskanals (I) angeordnet ist, und an einer zweiten Elektrode (Uinj+), die an einem zweiten Ende des Injektionskanals (I) angeordnet ist; und
Steuern der Trennvorrichtung (S, SG, Sep+, Sep-) als Reaktion auf den detektierten Parameter.

6. Verfahren nach dem vorhergehenden Anspruch, wobei das Detektieren des elektrischen Parameter folgenden Schritt aufweist:
- Ermitteln eines Spitzenwertes des gemessenen physikalischen Parameters.

7. Verfahren nach Anspruch 5 oder 6, das ferner folgenden Schritt aufweist:
Trennen der aufgenommenen Probe.

## Revendications

1. Dispositif de chargement d'échantillon pour charger et injecter un échantillon d'un fluide comprenant un spécimen, le dispositif de chargement d'échantillon comprenant :
un réservoir de spécimen (Res) ;
un canal d'injection (I) ;
une première électrode (Uinj-) disposée à une première extrémité du canal d'injection (I) et une deuxième électrode (Uinj+) disposée à une deuxième extrémité du canal d'injection (I), la première et la deuxième électrodes (Uinj-, Uinj+) étant à même d'appliquer un champ électrique le long du canal d'injection (I) ;
un dispositif de séparation (S, SG, Sep+, Sep-) ;
un injecteur (Uinj, UIN) à même d'injecter le fluide comprenant le spécimen à partir du réservoir de spécimen (Res) dans le canal d'injection (I), et
le canal d'injection (I) comportant un point d'injection d'échantillon (INJ) pour injecter l'échantillon du fluide dans le dispositif de séparation (S, SG, Sep+, Sep-) à même de séparer l'échantillon, et
une unité de commande (RD) à même de détecter un paramètre électrique sur une période de temps et de commander le dispositif de séparation (S, SG, Sep+, Sep-) en réaction à celui-ci ;
**caractérisé en ce que** l'unité de commande (RD) est couplée à la première et à la deuxième électrodes (Uinj-, Uinj+) et est à même de détecter sur une période de temps le paramètre électrique du fluide le long du canal d'injection (I).

2. Dispositif de chargement d'échantillon suivant la revendication 1,
dans lequel le paramètre électrique est une résistance du fluide, une différence de potentiel ou un flux de courant le long du canal d'injection (I).

3. Dispositif de chargement d'échantillon suivant la revendication 1 ou 2, dans lequel
la première électrode (Uinj-) est disposée près de la première extrémité du canal d'injection (I) et la deuxième électrode (Uinj+) est disposée près de la deuxième extrémité du canal d'injection (I), dans lequel le point d'injection d'échantillon (INJ) est disposé entre la première et la deuxième électrodes (Uinj-, Uinj+).

4. Dispositif de chargement d'échantillon suivant l'une quelconque des revendications précédentes,
comprenant une première électrode (Sep+) et une deuxième électrode (Sep-) disposées dans le canal de séparation (S), dans lequel le point d'injection d'échantillon (INJ) est disposé entre la première et la deuxième électrodes (Sep+, Sep-).

5. Procédé pour charger et injecter un échantillon d'un fluide comprenant un spécimen, le procédé comprenant :
l'injection du fluide à partir d'un réservoir de spécimen (Res) dans un canal d'injection (I), dans lequel le canal d'injection (I) comporte un point d'injection d'échantillon (INJ) pour injecter un échantillon du fluide dans un dispositif de séparation (S, SG, Sep+, Sep-) à même de séparer l'échantillon ;
la détection - au niveau d'une première électrode (Uinj-) disposée à une première extrémité du canal d'injection (I) et au niveau d'une deuxième électrode (Uinj+) disposée à une deuxième extrémité du canal d'injection (I) - sur une période de temps d'un paramètre électrique du fluide le long du canal d'injection (I), et
le fait de commander le dispositif de séparation (S, SG, Sep+, Sep-) en réaction au paramètre détecté.

6. Procédé suivant la revendication précédente, dans lequel la détection du paramètre électrique comprend :
- la détermination d'une valeur de crête du paramètre physique mesuré.

7. Procédé suivant la revendication 5 ou 6, comprenant en outre :
la séparation de l'échantillon reçu.
